# EUROPÄISCHE PATENTANMELDUNG

(11) **EP 3 228 594 A2**
(43) Veröffentlichungstag der Anmeldung: **11.10.2017**
(21) Anmeldenummer: 17160811.0
(22) Anmeldetag: 14.03.2017
(51) Int. Cl.: C01B 33/12, C09C 1/30, A01G 15/00

(54) **VERWENDUNG VON OFFEN STRUKTURIERTEN, HYDROPHIL MODIFIZIERTEN, MESOPORÖSEN MIKRO-SIO2-PARTIKELN ZUR ABWEHR VON HAGEL UND/ODER ZUR AUSLÖSUNG DER ABREGNUNG EINER GEWITTERWOLKE UND VERFAHREN ZUR HERSTELLUNG BESAGTER PARTIKEL**

(30) Priorität: 15.03.2016 DE 102016204266
(71) Anmelder: Fraunhofer-Gesellschaft zur Förderung der angewandten Forschung e.V., 80686 München (DE)
(72) Erfinder: Schmid, Helmut, 72250 Freudenstadt (DE); Eckl, Wilhelm, 76227 Karlsruhe (DE); Inone-Kauffmann, Emilia, 76327 Pfinztal (DE)
(74) Vertreter: Pfenning, Meinig & Partner mbB

(57) **Zusammenfassung**

Die Erfindung betrifft ein Verfahren zur Abwehr von Hagel und/oder zur Auslösung der Abregnung einer Gewitterwolke, umfassend den Schritt, dass offen strukturierte, hydrophil modifizierte, mesoporöse Mikro-SiO₂-Partikel in der Nähe einer Gewitterwolke platziert werden

## Beschreibung

Erfindungsgemäß wird ein Verfahren zur Abwehr von Hagel und/oder zur Auslösung der Abregnung einer Gewitterwolke bereitgestellt, wobei in dem Verfahren offen strukturierte, hydrophil modifizierte, mesoporöse Mikro-SiO₂-Partikel in der Nähe einer Gewitterwolke platziert werden. Ferner wird vorgeschlagen, offen strukturierten, hydrophil modifizierte, mesoporöse Mikro-SiO₂-Partikel zur Abwehr von Hagel und/oder zur Auslösung der Abregnung einer Gewitterwolke zu verwenden. Ein Verfahren zur Herstellung von hierfür geeigneten offen strukturierten, hydrophil modifizierten, mesoporösen Mikro-SiO₂-Partikeln wird vorgestellt. Das technische Anwendungsgebiet der Erfindung liegt somit im Bereich der Wetterbeeinflussung.

Gewitter entstehen, wenn Luftvolumina unterschiedlicher Temperatur aufeinander stoßen. Dabei werden Kaltfront-Gewitter und Wärme-Gewitter unterschieden. Bei einem Kaltfront-Gewitter wird obere feuchte Warmluft von einer Kaltluft-Strömung unterwandert. Ein Wärme-Gewitter entsteht bei intensiver Sonneneinstrahlung auf feuchte Warmluft, die dann rasch bis in Höhen von 10 km steigt und sich abkühlt, wobei es je nach Grad der Kondensation des Wasserdampf-Anteils zunächst zur Wolken- und dann zur Regenbildung kommen kann. Voraussetzung für die Blitzentstehung sind Reibungseffekte durch Luft-Strömungen, die zu einer Ladungstrennung führen, wobei sich Eiskristalle höherer Sphären negativ und Wassertröpfchen unterer Sphären positiv aufladen. Diese Prozesse sind jedoch noch nicht im Detail verstanden.

Blitze sind Lichtbögen der Länge L, die den Ladungsausgleich innerhalb der Wolke (L = 10 km) bzw. auch mit der Erde (L = 2 km) wieder herstellen. Donner entsteht durch explosionsartige Luftausdehnung radial zum Blitzkanal, in dem kurzzeitig Temperaturen von 30 000 K entstehen.

Hagelkörner bilden sich in wasserreichen, hochreichenden Wolken mit starken Auf- und Abwinden. Um einen Kristallisationskern lagern sich beim Zusammenstoß mit unterkühlten Wassertropfen Eisschichten an, so dass ein schalenartig aufgebautes Hagelkorn entsteht. Bei der sog. Wolkenimpfung sollen künstlich in die Wolke eingebrachte Kristallisationskeime zu einer vermehrten Bildung von Hagelkörnern führen, die dadurch kleiner bleiben und beim Aufprall weniger Schäden anrichten. Das gleiche Prinzip soll auch zur Bildung größerer Regentropfen führen, so dass es zu einem verstärkten und früheren Abregnen kommt. Dadurch soll die Hagelbildung sogar gänzlich vermeidbar sein und in trockenen Gebieten die Niederschlagsmenge erhöht werden.

Das Ausfrieren und Zusammenlagern von Wassertröpfchen geschieht bei mittlerer Höhe (5 km) im Aufwind-Schlot, der in der Regel nur eine kleine radiale Ausdehnung von max. 2, 5 km ausmacht. Die so entstandenen Hagelkörner können durch vertikale Oszillationsprozesse im Extremfall bis zur Fußballgröße anwachsen. Jährlich entsteht durch Hagelschlag weltweit ein Schaden, der sich auf mehrere Millionen Euro beziffert.

Zur Hagel-Abwehr werden deshalb nach dem Stand der Technik u.a. Kleinflugzeuge ("Hagelflieger") eingesetzt, die mit Generatoren (auch "Fackeln" oder "Gasturbinen" genannt) Silberiodid (Agl) feinverteilt in Gewitterwolken ausbringen, wobei die Wassertröpfchen mit diesen Kondensationskeimen "angeimpft" werden und der Niederschlag dadurch ausgelöst wird. Die Generatoren enthalten üblicherweise gepresstes Schwarzpulver, Aceton und ca. 6-7 Gew.-% Agl. Beim Verbrennen des Schwarzpulvers entstehen Agl-Partikel, die von den Hagelfliegern unter der Wolkenbasis ausgebracht werden und vom Aufwind in die Gewitterwolke transportiert werden. Dort dienen sie als Kristallisationskeime, welche die Bildung von kleineren Hagelkörnern und Regentropfen, die zum Abregnen fähig sind, begünstigt. Die bei diesem System ausgetragene Menge Agl, die am Boden ankommt, beträgt ca. 2 g/ha.

Agl-Partikel werden deshalb verwendet, da es sich bei Agl um eine Substanz mit hydrophiler Oberfläche handelt, was für die Benetzung vorteilhaft ist. Die gleichzeitige Hygroskopizität von Agl ist prinzipiell nachteilig. Als Funktion der Zeit erfolgt eine Zersetzung in Ag und I₂.

Die Funktionsfähigkeit dieses Systems wurde in mehreren Studien nachgewiesen. Nachteilig sind jedoch die Verwendung von Aceton als Brennstoff und der Austrag reaktionsfähiger Chemikalien in die Umwelt, sowie die Komplexität des Systems als auch des Generators.

Ausgehend hiervon war es die Aufgabe der vorliegenden Erfindung, eine von Agl verschiedene, chemische Substanz als Kondensationskeim bereitzustellen, die bereits in geringeren eingesetzten Mengen eine effiziente Hagelabwehr oder Auslösung der Abregnung einer Gewitterwolke bewirkt und die keinen Generator zur Verbrennung benötigt. Vielmehr sollte ein effektiveres und umweltfreundlicheres Verfahren zur Abwehr von Hagel oder zur Auslösung der Abregnung einer Gewitterwolke bereitgestellt werden.

Die erfindungsgemäße Aufgabe wird gelöst durch das Verfahren gemäß Anspruch 1, das Verfahren gemäß Anspruch 7 und die Verwendung gemäß Anspruch 15. Die abhängigen Ansprüche zeigen vorteilhafte Ausgestaltungsformen auf.

Erfindungsgemäß wird ein Verfahren Abwehr von Hagel und/oder zur Auslösung von Abregnung einer Gewitterwolke, bereitgestellt, wobei das Verfahren den Schritt umfasst, dass offen strukturierte, hydrophil modifizierte, mesoporöse Mikro-SiO₂-Partikel in der Nähe einer Gewitterwolke (insbesondere unter einer Gewitterwolke oder in einer Gewitterwolke) platziert werden.

Unter "Mikro-SiO₂-Partikel" werden Partikel aus SiO₂ verstanden, die eine Partikelgröße im Mikrometerbereich aufweisen. Mit anderen Worten beträgt die längste Ausdehnung der Partikel in eine Raumrichtung 1 bis 1000 µm. Die Partikelgröße kann über Rasterelektronenmikroskopie (REM) bestimmt werden.

Unter "mesoporös" wird verstanden, dass die Mikro-SiO₂-Partikel Poren mit einem Porendurchmesser zwischen 2 und 50 nm aufweisen. Die Porengröße kann über REM bestimmt werden.

Der Vorteil der erfindungsgemäßen Verwendung von offen strukturierten, hydrophil modifizierten, mesoporösen Mikro-SiO₂-Partikel gegenüber der Verwendung der bekannten Mischung aus Agl, Aceton und Schwarzpulver ist, dass kein als umweltgefährlich eingestufter Stoff (Agl), kein organisches Lösungsmittel (Aceton) und kein durch Verbrennung entstehendes Kohlendioxid in die Umwelt eingebracht werden. Stattdessen dient erfindungsgemäß ein chemisch inerter, nicht-humantoxischer und umweltverträglicher Stoff (hydrophiliertes SiO₂) als Kondensationskeim. Die erfindungsgemäßen Mikro-SiO₂-Partikel weisen gegenüber Agl-Partikeln eine geringere erreichbare Schüttdichte in Luft auf, sodass sich die Mikro-SiO₂-Partikel besser in Luft verteilen lassen und daher bei gleicher eingesetzter Masse effektiver wirken als Agl-Partikel. Die Modifizierung der Mikro-SiO₂-Partikel mit dem hydrophilen Material vermindert eine Verklumpung der Mikro-SiO₂-Partikel verglichen mit unmodifizierten Mikro-SiO₂-Partikeln.

In einer bevorzugten Ausführungsform enthalten die offen strukturierten, mesoporösen Mikro-SiO₂-Partikel mindestens eine hydrophile Substanz, die bevorzugt über nicht-kovalente Wechselwirkungen oder mindestens eine kovalente Bindung an die mesoporösen Mikro-SiO₂-Partikel gebunden ist.

Die offen strukturierten, mesoporösen Mikro-SiO₂-Partikel können dergestalt hydrophil modifiziert sein, dass sie zumindest bereichsweise, bevorzugt vollständig, mit mindestens einer hydrophilen Substanz beschichtet sind.

Die offen strukturierten, hydrophil modifizierten, mesoporösen Mikro-SiO₂-Partikel können über eine Beschichtung offen strukturierter, mesoporöser Mikro-SiO₂-Partikel mit mindestens einer hydrophilen Substanz im Spritzschicht-Verfahren, bevorzugt im Wirbelschicht-Verfahren, herstellbar sein oder hergestellt worden sein.

Die mindestens eine hydrophile Substanz kann ausgewählt sein aus der Gruppe bestehend aus anionischen Tensiden, kationischen Tensiden, bipolaren Tensiden (z.B. zwitterionischen Tensiden), nichtionischen Tensiden und deren Salze oder Mischungen, bevorzugt ausgewählt sein aus der Gruppe bestehend aus anionischen Tensiden, kationischen Tensiden und deren Salze, besonders bevorzugt ausgewählt sein aus der Gruppe bestehend aus anionischen Tenside und deren Salze, insbesondere ausgewählt aus der Gruppe bestehend aus Sulfatgruppen-haltigen anionischen Tensiden und deren Salze. Es ist insbesondere vorteilhaft, wenn die hydrophile Modifikation der mesoporöse Mikro-SiO₂-Partikel insgesamt entweder eine positive elektrische Ladung oder negative elektrische Ladung aufweist, denn in diesem Fall stoßen sich die modifizierten mesoporöse Mikro-SiO₂-Partikel durch ionische Wechselwirkungen gegenseitig ab. Dies bewirkt, dass eine Verklumpung der modifizierten mesoporösen Mikro-SiO₂-Partikel drastisch reduziert bis vollständig vermieden wird.

Die mindestens eine hydrophile Substanz kann ausgewählt sein aus der Gruppe bestehend aus Polycarbonsäureester enthaltend eine anionische Gruppe, Salze und Mischungen hiervon, bevorzugt ausgewählt sein aus der Gruppe bestehend aus einem Dicarbonsäureester enthaltend eine anionische Gruppe und Salze hiervon, besonders bevorzugt ausgewählt sein aus einem Dicarbonsäureester enthaltend eine Sulfatgruppe und Salze hiervon. Insbesondere kann es sich bei der hydrophilen Substanz um Sulfobernsteinsäure-dioctylester bzw. Natrium- Sulfobernsteinsäure-dioctylester handeln. Unter dem Begriff "Polycarbonsäureester" werden Ester aus Carbonsäuren, die mehr als zwei Carboxylgruppen aufweisen, verstanden (z.B. Dicarbonsäureester, Tricarbonsäureester, Tetracarbonsäureester usw.).

Die offen strukturierten, hydrophil modifizierten Mikro-SiO₂- Partikel können eine mittlere Korngröße von 1 bis 100 µm, bevorzugt 10 bis 90 µm, besonders bevorzugt 20 bis 80 µm, insbesondere 40 bis 60 µm aufweisen. Ganz besonders vorteilhaft weisen die Mikro-SiO₂-Partikel eine mittlere Korngröße von 50 µm auf. Mit mittlerer Korngröße ist der über dynamische Lichtstreuung (DLS) gemessene mittlere Partikeldurchmesser gemeint. Mikro-SiO₂-Partikel mit einer mittleren Korngröße in dem oben genannten Bereich haben sich als besonders vorteilhafte Kristallisationskeime herausgestellt und weisen eine hervorragende Rieselfähigkeit auf.

In einer bevorzugten Ausführungsform befinden sich die offen strukturierten, hydrophil modifizierten Mikro-SiO₂-Partikel in einem Behälter oder werden in einen Behälter (sog. "Torpedo-Tank"), der dazu geeignet ist, die offen strukturierten, hydrophil modifizierten Mikro-SiO₂-Partikel nach dem Venturi-Prinzip zu entleeren, eingebracht. Bevorzugt weist der Behälter hierfür eine Venturi-Düse auf, die insbesondere dazu geeignet ist, die in dem Behälter befindlichen offen strukturierten, hydrophil modifizierten Mikro-SiO₂-Partikel durch in die Venturi-Düse einströmende Luft in ein Aerosol zu verwandeln. Die Venturi-Düse kann dazu geeignet sein, elektromagnetisch betätigt zu werden. Der Vorteil an dieser Ausführungsform ist, dass keine Verbrennung von Schwarzpulver und/oder Aceton nötig ist, um ein Aerosol aus Kondensationskeimen unter oder in die Gewitterwolke zu bringen. Dies ist aus ökonomischen, ökologischen und sicherheitstechnischen Gesichtspunkten vorteilhaft. Ferner ist eine effizientere Abwehr von Hagel oder Auslösung der Abregnung einer Gewitterwolke möglich, da verglichen mit dem Agl-Aceton-Schwarzpulver-System größere Mengen an Kondensationskeimen (erfindungsgemäße Mikro-SiO₂-Partikel) in einem Behälter definierter Größe transportiert werden können. In dem erfindungsgemäßen Verfahren werden die offen strukturierten, hydrophil modifizierten Mikro-SiO₂-Partikel daher bevorzugt nach dem Venturi-Prinzip unter oder in die Gewitterwolke gebracht.

Die offen strukturierten, hydrophil modifizierten Mikro-SiO₂-Partikel können eine Schüttdichte in Luft von 1 bis 1000 g/m³, bevorzugt 10 bis 200 g/m³, besonders bevorzugt 20 bis 100 g/m³, insbesondere 40 bis 60 g/m³, aufweisen.

Ferner wird erfindungsgemäß ein Verfahren zur Herstellung von offen strukturierten, hydrophil modifizierten, mesoporösen Mikro-SiO₂-Partikeln, die zur Abwehr von Hagel oder zur Auslösung der Abregnung einer Gewitterwolke geeignet sind, bereitgestellt. Das Verfahren umfasst die Schritte
a) Hydrolyse von SiCl₄ in einer H₂/O₂-Flamme zu offen strukturierten, mesoporösen Mikro-SiO₂-Partikeln;
b) Kontaktierung der offen strukturierten, mesoporösen Mikro-SiO₂-Partikel mit einer wässrigen Beschichtungslösung, die mindestens eine hydrophile Substanz enthält, über ein Spritzschicht-Verfahren, sodass offen strukturierte, hydrophil modifizierte, mesoporöse Mikro-SiO₂-Partikel entstehen; und
c) Trocknung der offen strukturierten, hydrophil modifizierten, mesoporösen Mikro-SiO₂-Partikel.

Die Hydrolyse von SiCl₄ kann bei einer Temperatur von ≥ 1000 °C, bevorzugt ≥ 1200 °C, besonders bevorzugt ≥ 1400 °C, insbesondere ≥ 1500 °C, stattfinden.

In dem Spritzschicht-Verfahren können 0,1 bis 10 kg, bevorzugt 0,2 bis 5 kg, besonders bevorzugt 0,5 bis 2 kg, insbesondere 1 kg, offen strukturierte, mesoporöse Mikro-SiO₂-Partikel vorgelegt werden.

Ferner kann in dem Spritzschicht-Verfahren eine Eingangstemperatur von 30 bis 70 °C, bevorzugt 35 bis 65 °C, besonders bevorzugt 40 bis 60 °C, insbesondere 50 °C, eingestellt werden.

In einer bevorzugten Ausführungsform wird in dem Spritzschicht-Verfahren ein Luftdurchsatz von 10 bis 400 m³/h, bevorzugt 20 bis 300 m³/h, besonders bevorzugt 50 bis 200 m³/h, insbesondere 100 m³/h, eingestellt.

Die wässrige Beschichtungslösung kann 0,1 bis 10 g/L, bevorzugt 0,2 bis 5 g/L, besonders bevorzugt 0,5 bis 2 g/L, insbesondere 1 g/L, der mindestens einen hydrophilen Substanz enthalten.

Die mindestens eine hydrophile Substanz kann ausgewählt sein aus der Gruppe bestehend aus anionischen Tensiden, kationischen Tensiden, bipolaren Tensiden, nichtionischen Tensiden und deren Salze oder Mischungen, bevorzugt ausgewählt sein aus der Gruppe bestehend aus anionischen Tensiden, kationischen Tensiden und deren Salze, besonders bevorzugt ausgewählt sein aus der Gruppe bestehend aus anionischen Tenside und deren Salze, insbesondere ausgewählt sein aus der Gruppe bestehend aus Sulfatgruppen-haltigen anionischen Tensiden und deren Salze.

Ferner kann die mindestens eine hydrophile Substanz ausgewählt sein aus der Gruppe bestehend aus Polycarbonsäureestern enthaltend eine anionische Gruppe, Salze und Mischungen hiervon, bevorzugt ausgewählt sein aus der Gruppe bestehend aus einem Dicarbonsäureester enthaltend eine anionische Gruppe und Salze hiervon, besonders bevorzugt ausgewählt sein aus einem Dicarbonsäureester enthaltend eine Sulfatgruppe und Salze hiervon, insbesondere Natrium-Sulfobernsteinsäure-dioctylester.

Die wässrige Beschichtungslösung kann mit einer Sprührate von 1 bis 10 L/min, bevorzugt 2 bis 8 L/min, besonders bevorzugt 4 bis 6 L/min, insbesondere 5 L/min, gesprüht werden.

Die wässrige Beschichtungslösung kann für einen Zeitraum von 0,5 bis 10 min, bevorzugt 1 bis 5 min, besonders bevorzugt 1,5 bis 3 min, insbesondere 2 min, gesprüht werden.

Die offen strukturierten, hydrophil modifizierten, mesoporösen Mikro-SiO₂-Partikeln können für einen Zeitraum von 5 bis 40 min, bevorzugt 10 bis 30 min, besonders bevorzugt 15 bis 25 min, insbesondere 20 min., getrocknet werden.

In einer bevorzugten Ausführungsform wird in dem Spritzschicht-Verfahren ein Hüttlin Kugelcoater, besonders bevorzugt der Hüttlin Kugelcoater HKC 05-TJ, verwendet.

In einer besonders bevorzugten Ausführungsform handelt es sich bei dem Spritzschicht-Verfahren um ein Wirbelschicht-Verfahren.

Ferner wird erfindungsgemäß die Verwendung von offen strukturierten, hydrophil modifizierten, mesoporösen Mikro-SiO₂-Partikeln zur Abwehr von Hagel und/oder zur Auslösung der Abregnung einer Gewitterwolke vorgeschlagen. Zudem wird vorgeschlagen, offen strukturierte, hydrophil modifizierte, mesoporöse Mikro-SiO₂-Partikel zur Erzeugung von Kunstschnee zu verwenden. Die offen strukturierten, hydrophil modifizierten, mesoporösen Mikro-SiO₂-Partikel sind bevorzugt durch das erfindungsgemäße Verfahren herstellbar oder hergestellt. Mit anderen Worten können die offen strukturierten, hydrophil modifizierten, mesoporösen Mikro-SiO₂-Partikeln Merkmale aufweisen, die oben im Zusammenhang mit dem erfindungsgemäßen Verfahren beschrieben wurden.

Anhand der nachfolgenden Figur und Beispiele soll der erfindungsgemäße Gegenstand näher erläutert werden ohne diesen auf die hier dargestellten spezifischen Ausführungsformen einschränken zu wollen.

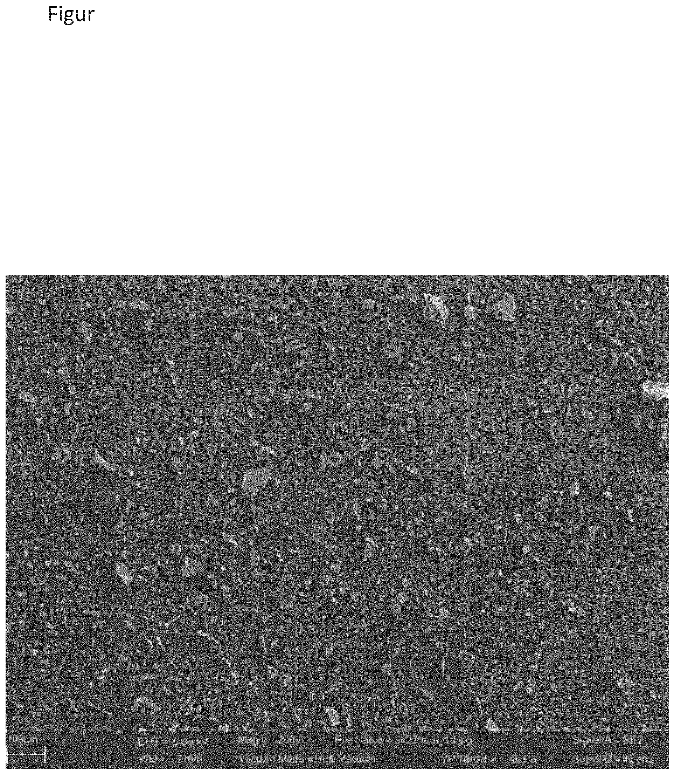

Die Figur zeigt eine REM-Aufnahme der erfindungsgemäßen offen strukturierten, hydrophil modifizierten, mesoporösen Mikro-SiO₂-Partikel.

### Beispiel 1- Herstellung des erfindungsgemäßen Pulvers

Die erfindungsgemäßen Partikel können folgendermaßen hergestellt werden:
1. Hydrolyse von SiCl₄ in einer durch Wasserstoff und Sauerstoff betriebenen Flamme (H₂/O₂-Flamme) bei 1500 °C, wobei Mikro-SiO₂-Partikel entstehen. Die entstehenden Partikel sind bereits aufgrund der Bindungspolarität, der resultierenden Oberflächenpartialladung und der Rest-Silanolgruppen intrinsisch hydrophil; und
2. Beschichtung der Partikel mit einer hydrophilen Substanz, wobei die Hydrophilizität der Partikel weiter gesteigert wird. Die Beschichtung kann in der Wirbelschicht als Spray-Coating erfolgen, wobei hierbei insbesondere der Hüttlin Kugelcoater HKC 05-TJ (BWI Hüttlin GmbH) verwendet werden kann. Die Beschichtung wird vorzugsweise im Batchbetrieb durchgeführt.

Bevorzugte Prozessparameter für das Spray-Coating sind:
- Partikelvolage: 1 kg;
- Eingangstemperatur der Luft: 50 °C;
- Luftdurchsatz: 100 m³/h;
- Beschichtungslösung weist 1 g/L hydrophile Substanz in Wasser auf;
- Spray-Rate für die Beschichtungslösung: 5 l/min; und
- Sprüh-Zeit: 2 min, Trocknungszeit: 20 min.

Nach dem oben dargestellten Verfahren herstellbare beschichtete Mikro-SiO₂-Partikel sind zudem bei dem FhG-ICT kommerziell verfügbar.

### Beispiel 2 - Verfahren zur Hagelabwehr mit erfindungsgemäßem Pulver

0,95 g der in Beispiel 1 hergestellten beschichteten Mikro-SiO₂-Partikel (Schüttdichte 50 g/m³) wird in einem zylindrisch-konischen Torpedotank mit einem Volumen von 19 Litern, einer Länge von 100 cm und einem Durchmesser von 20 cm vorgelegt. Dieser Torpedotank wird mit einem Bügel-Adapter zur Verankerung, vorzugsweise unterhalb der Tragflächen, an einem Kleinflugzeug angebracht. Pro Kleinflugzeug können mindestens 2 Tanks mit symmetrischer Anordnung bezüglich der Flugzeug-Längsachse zum Einsatz kommen. Die Torpedotanks weisen an der von der Flugrichtung abgewandten Seite eine konische Form auf. An diesem Teil der Torpedotanks ist ein Venturi-Ventil (Venturi-Düse) angebracht, das sich elektromagnetisch betätigen lässt. Der Austrag des Pulvers geschieht bei geöffnetem Ventil nach dem Venturi-Prinzip.

Eine strömungsdynamische Abschätzung bezogen auf die Fluggeschwindigkeit von 200 km/h, eine radiale Ausdehnung des Aufwindschlots von 2,5 km und sequenzieller Verwendung der beiden beschriebenen Torpedo-Tanks ergibt, dass bei einem freien Düsendurchmesser von 7,5 mm eine zur Vermeidung von Hagel ausreichende absolute Keimmenge und gleichermaßen deren Feinverteilung im Querschnitt des Aufwindschlots dargestellt werden kann.

## Patentansprüche

1. Verfahren zur Abwehr von Hagel und/oder zur Auslösung der Abregnung einer Gewitterwolke, umfassend den Schritt, dass offen strukturierte, hydrophil modifizierte, mesoporöse Mikro-SiO₂-Partikel in der Nähe einer Gewitterwolke platziert werden.

2. Verfahren gemäß Anspruch 1, **dadurch gekennzeichnet, dass** die offen strukturierten mesoporöse Mikro-SiO₂-Partikel mindestens eine hydrophile Substanz enthalten, die bevorzugt über nicht-kovalente Wechselwirkungen oder mindestens eine kovalente Bindung an die mesoporösen Mikro-SiO₂-Partikel gebunden ist.

3. Verfahren gemäß einem der vorhergehenden Ansprüche, **dadurch gekennzeichnet, dass** die offen strukturierten, mesoporösen Mikro-SiO₂-Partikel
a) dergestalt hydrophil modifiziert sind, dass sie zumindest bereichsweise, bevorzugt vollständig, mit mindestens einer hydrophilen Substanz beschichtet sind; und/oder
b) über eine Beschichtung offen strukturierter, mesoporöser Mikro-SiO₂-Partikel mit mindestens einer hydrophilen Substanz im Spritzschicht-Verfahren, bevorzugt im Wirbelschicht-Verfahren, herstellbar sind oder hergestellt wurden.

4. Verfahren gemäß einem der vorhergehenden Ansprüche, **dadurch gekennzeichnet, dass** die mindestens eine hydrophile Substanz ausgewählt ist aus der Gruppe bestehend aus
a) anionischen Tensiden, kationischen Tensiden, bipolaren Tensiden, nichtionischen Tensiden und deren Salze oder Mischungen, bevorzugt ausgewählt aus der Gruppe bestehend aus anionischen Tensiden, kationischen Tensiden und deren Salze, besonders bevorzugt ausgewählt aus der Gruppe bestehend aus anionischen Tenside und deren Salze, insbesondere ausgewählt aus der Gruppe bestehend aus Sulfatgruppen-haltigen anionischen Tensiden und deren Salze; und/oder
b) Polycarbonsäureestern enthaltend eine anionische Gruppe, Salze und Mischungen hiervon, bevorzugt ausgewählt aus der Gruppe bestehend aus einem Dicarbonsäureester enthaltend eine anionische Gruppe und Salze hiervon, besonders bevorzugt ausgewählt aus einem Dicarbonsäureester enthaltend eine Sulfatgruppe und Salze hiervon, insbesondere Natrium-Sulfobernsteinsäure-dioctylester.

5. Verfahren gemäß einem der vorhergehenden Ansprüche, **dadurch gekennzeichnet, dass** sich die offen strukturierten, hydrophil modifizierten Mikro-SiO₂-Partikel in einem Behälter befinden oder in einen Behälter eingebracht werden, der dazu geeignet ist, die offen strukturierten, hydrophil modifizierten Mikro-SiO₂-Partikel nach dem Venturi-Prinzip zu entleeren, wobei der Behälter bevorzugt eine Venturi-Düse aufweist.

6. Verfahren gemäß einem der vorhergehenden Ansprüche, **dadurch gekennzeichnet, dass** die offen strukturierten, hydrophil modifizierten Mikro-SiO₂-Partikel
a) nach dem Venturi-Prinzip unter oder in die Gewitterwolke gebracht werden; und/oder
b) eine mittlere Korngröße von 1 bis 100 µm, bevorzugt 10 bis 90 µm, besonders bevorzugt 20 bis 80 µm, insbesondere 40 bis 60 µm, aufweisen; und/oder
c) eine Schüttdichte in Luft von 1 bis 1000 g/m³, bevorzugt 10 bis 200 g/m³, besonders bevorzugt 20 bis 100 g/m³, insbesondere 40 bis 60 g/m³, aufweisen.

7. Verfahren zur Herstellung von offen strukturierten, hydrophil modifizierten, mesoporösen Mikro-SiO₂-Partikeln, die zur Abwehr von Hagel oder zur Auslösung der Abregnung einer Gewitterwolke geeignet sind, umfassend die Schritte
a) Hydrolyse von SiCl₄ in einer H₂/O₂-Flamme zu offen strukturierten, mesoporösen Mikro-SiO₂-Partikeln;
b) Kontaktierung der offen strukturierten, mesoporösen Mikro-SiO₂-Partikel mit einer wässrigen Beschichtungslösung, die mindestens eine hydrophile Substanz enthält, über ein Spritzschicht-Verfahren, sodass offen strukturierte, hydrophil modifizierte, mesoporöse Mikro-SiO₂-Partikel entstehen; und
c) Trocknung der offen strukturierten, hydrophil modifizierten, mesoporösen Mikro-SiO₂-Partikel.

8. Verfahren gemäß Anspruch 7, **dadurch gekennzeichnet, dass** die Hydrolyse von SiCl₄ bei einer Temperatur von ≥ 1000 °C, bevorzugt ≥ 1200 °C, besonders bevorzugt ≥ 1400 °C, insbesondere ≥ 1500 °C, stattfindet.

9. Verfahren gemäß einem der Ansprüche 7 oder 8, **dadurch gekennzeichnet, dass** in dem Spritzschicht-Verfahren
a) 0,1 bis 10 kg, bevorzugt 0,2 bis 5 kg, besonders bevorzugt 0,5 bis 2 kg, insbesondere 1 kg, offen strukturierte, mesoporöse Mikro-SiO₂-Partikel vorgelegt werden; und/oder
b) eine Eingangstemperatur von 30 bis 70 °C, bevorzugt 35 bis 65 °C, besonders bevorzugt 40 bis 60 °C, insbesondere 50 °C, eingestellt wird; und/oder
c) ein Luftdurchsatz von 10 bis 400 m³/h, bevorzugt 20 bis 300 m³/h, besonders bevorzugt 50 bis 200 m³/h, insbesondere 100 m³/h, eingestellt wird; und/oder
d) ein Hüttlin Kugelcoater, bevorzugt der Hüttlin Kugelcoater HKC 05-TJ, verwendet wird.

10. Verfahren gemäß einem der Ansprüche 7 bis 9, **dadurch gekennzeichnet, dass** die wässrige Beschichtungslösung 0,1 bis 10 g/L, bevorzugt 0,2 bis 5 g/L, besonders bevorzugt 0,5 bis 2 g/L, insbesondere 1 g/L, der hydrophilen Substanz enthält.

11. Verfahren gemäß einem der Ansprüche 7 bis 10, **dadurch gekennzeichnet, dass** die mindestens eine hydrophile Substanz ausgewählt ist aus der Gruppe bestehend aus
a) anionischen Tensiden, kationischen Tensiden, bipolaren Tensiden, nichtionischen Tensiden und deren Salze oder Mischungen, bevorzugt ausgewählt aus der Gruppe bestehend aus anionischen Tensiden, kationischen Tensiden und deren Salze, besonders bevorzugt ausgewählt aus der Gruppe bestehend aus anionischen Tenside und deren Salze, insbesondere ausgewählt aus der Gruppe bestehend aus Sulfatgruppen-haltigen anionischen Tensiden und deren Salze; und/oder
b) Polycarbonsäureestern enthaltend eine anionische Gruppe, Salze und Mischungen hiervon, bevorzugt ausgewählt aus der Gruppe bestehend aus einem Dicarbonsäureester enthaltend eine anionische Gruppe und Salze hiervon, besonders bevorzugt ausgewählt aus einem Dicarbonsäureester enthaltend eine Sulfatgruppe und Salze hiervon, insbesondere Natrium-Sulfobernsteinsäure-dioctylester.

12. Verfahren gemäß einem der Ansprüche 7 bis 11, **dadurch gekennzeichnet, dass** die wässrige Beschichtungslösung
a) mit einer Sprührate von 1 bis 10 L/min, bevorzugt 2 bis 8 L/min, besonders bevorzugt 4 bis 6 L/min, insbesondere 5 L/min, gesprüht wird; und/oder
b) für einen Zeitraum von 0,5 bis 10 min, bevorzugt 1 bis 5 min, besonders bevorzugt 1,5 bis 3 min, insbesondere 2 min, gesprüht wird.

13. Verfahren gemäß einem der Ansprüche 7 bis 12, **dadurch gekennzeichnet, dass** die offen strukturierten, hydrophil modifizierten, mesoporösen Mikro-SiO₂-Partikeln für einen Zeitraum von 5 bis 40 min, bevorzugt 10 bis 30 min, besonders bevorzugt 15 bis 25 min, insbesondere 20 min., getrocknet werden.

14. Verwendung von offen strukturierten, hydrophil modifizierten, mesoporösen Mikro-SiO₂-Partikeln
a) zur Abwehr von Hagel; und/oder
b) zur Auslösung der Abregnung einer Gewitterwolke; und/oder
c) zur Erzeugung von Kunstschnee.

15. Verwendung gemäß Anspruch 14, **dadurch gekennzeichnet, dass** die offen strukturierten, hydrophil modifizierten, mesoporösen Mikro-SiO₂-Partikel durch das Verfahren gemäß einem der Ansprüche 7 bis 13 herstellbar sind oder hergestellt sind.
